# EUROPEAN PATENT APPLICATION

(11) **EP 2 918 611 A1**
(43) Date of publication of application: **16.09.2015**
(21) Application number: 14158602.4
(22) Date of filing: 10.03.2014
(51) Int. Cl.: C08C 19/02, C08F 8/04

(54) **Process for the reduction of nitrile groups of hydrogenated nitrile rubber**

(71) Applicant: LANXESS Deutschland GmbH, 50569 Köln (DE)
(72) Inventor: Jentsch, Jörg-Dietrich, 51381 Leverkusen (DE); Kaulen, Johannes, 51519 Odenthal (DE); Obrecht, Werner, 47447 Moers (DE); Kustov, Leonid, 10739 Moscow 2 (RU); Greish, Alexander, Moscow (RU); Shouvalova, Elena, Moscow (RU)

(57) **Abstract**

The present invention relates to a process for the reduction of nitrile groups of partially or completely hydrogenated nitrile rubber to amino groups by hydrogenation in the presence of a Raney-cobalt catalyst.

## Description

### Field of the invention

The present invention is related to a process for the reduction of nitrile groups of partially or completely hydrogenated nitrile rubber to amino groups by hydrogenation in the presence of a Raney-cobalt catalyst.

### Background of the invention

Hydrogenated nitrile rubber is prepared for instance, by the selective hydrogenation of nitrile rubber and is a specialty rubber that exhibits very good heat resistance, excellent ozone and chemical resistance, good mechanical properties, and excellent oil resistance. Hydrogenation of the nitrile rubber is used to improve the properties of the polymer **(**Hashimoto, K.; Todani, Y. Highly saturated nitrile elastomer, in Handbook of Elastomers-New Development and Technology, Bhowmick, A. K, Stephens, H. L., Eds.; Marcel Dekker: New York, 1988**;** Chapter 24; Weinstein, A. H. Elastomeric tetramethylene-ethylethylene-acrylonitrile copolymers. Rubber Chem. Technol. 1984,57, 203-215**).**

To enhance the polymer material resistance to the degradation, it is necessary to remove carbon-carbon unsaturation, which can be done by a hydrogenation process. However, the relatively high cost of this process is a limiting factor for broader applications. Using efficient techniques and employing low cost catalysts make it possible to decrease the overall cost of the process.

Two typical techniques are known for hydrogenation of polymers that are based on homogeneous and heterogeneous catalysts. Homogeneous hydrogenation provides high conversions, however, this method sometimes causes chain scission and often leads to polymer contamination with the metal due to catalyst extraction difficulties. Heterogeneous hydrogenation yields moderate conversions and in certain cases is more acceptable than homogeneous hydrogenation due to reduced chain scission, no contamination of the polymer, and the ease of catalyst extraction, separation and regeneration. Furthermore, supported heterogeneous transition and noble metal catalysts are recyclable with no byproducts unlike homogeneous extraction products, which generate large amounts of wastes. Heterogeneous hydrogenation has been used to saturate many types of polydienes containing nitrile groups. However, there are no examples in the art related to the hydrogenation of the side nitrile groups in the polymers with a saturated main chain. Hydrogenation of acrylonitrile-butadiene rubbers in carbon tetrachloride and acetone was studied in [Studies in Surface Science and Catalysis, Volume 130, 2000, Pages 2105-2110] with palladium metal particles on mesoporous clay materials. The hydrogenation of carbon-carbon double bonds of the rubbers proceeded on the palladium metal particles within the mesopores larger than the size of the rubber macromolecules in the solvent under flowing hydrogen at atmospheric pressure or under 5 MPa of hydrogen; however, the reaction proceeded very slowly on the catalysts with mesopores smaller than the size of the rubber macromolecules. The mesopore size of catalysts governed the diffusion of the rubbers into the pores.

The complete hydrogenation of the C=C bonds in butadiene-nitrile rubber can be achieved using 1%Pd/C (conversion, 68%), Pd-Ca/C (95.3%), Pd-Ti/C (94.7%) Pd-V/C (92.6%), Pd-Zr (Zr/Pd=0.1)/C (97.8%) as well as other bimetallic catalysts.

However, it should be noted that in the above examples no hydrogenation of the nitrile group occurred in these systems **[**S. Zhou et al., Hydrogenation of Acrylonitrile-Butadiene Rubber Latexes, Journal of Applied Polymer Science, Vol. 91, (2004), p.2072-2078**].**

It was shown by many researchers that the finely dispersed catalysts (particles in the micron range) are more active than the granulated catalysts, but the separation of such dusty catalysts is a serious problem.

US 4,853,441 discloses the Pd-containing (5%) catalysts on CaCO₃ with a surface area not exceeding 10-15 m²/g as a carrier. When the hydrogenation was performed in acetone at 50°C and 50 atm for 4 h, the conversion reached 98.5%, but no hydrogenation of the nitrile group was found.

The hydrogenation of the C=C bond in the NBR (nitrile-butadiene rubber) can be carried out by using 5% Pd/C [US 4,404,329], Pd/C [US 5,244,943], or Pd/SiO₂ [US 5,651,995]. The latter catalyst was supported onto a SiO₂ carrier with the specific surface area not exceeding 500 m₂/g with pores diameter of 10-100 nm. The carrier with a higher surface area (>600 m²/g) is less suitable for the hydrogenation, because it contains very narrow pores and the metal particles located in such pores are not accessible and demonstrate no activity. The granulated catalyst with the grain size of 0.1-2 mm was found to be pretty good.

However, the above patents and publications describe the systems active only in the hydrogenation of the double bonds in the nitrile-butadiene polymers, whereas the nitrile groups were not hydrogenated at all.

Some other catalysts were proposed for the hydrogenation of the NBR polymer, including Al₂O₃, SiO₂-Al₂O₃, diverse modified carbon materials etc.

In US 2,456,428 the hydrogenation of polymeric nitriles with at least 4 units was suggested with any known hydrogenation catalysts (metallic nickel, colloidal platinum, finely divided palladium, copper chromite, oxides or sulfides of Cr, W or Mo; preferred Raney-Nickel). As an example a nitrile-styrene rubber was hydrogenated using a Raney Ni catalyst in benzene with addition of ammonia. However, no indication of the molecular weight before and after the hydrogenation or of the amount of gel formation during the hydrogenation was provided and no quantitative analysis of the conversion of nitrile groups to amino groups was done.

The hydrogenation of the butadiene-acrylonitrile co-polymer with molecular weights up to 100.000 by a two stage process wherein first, the C=C groups are hydrogenated on Pd/C and in the following step the CN fragments are hydrogenated on Ni Raney catalyst is disclosed in US 2,585,583. However, the drastic conditions of 250 °C and 930-950 atm do not allow commercial use of this method. Furthermore, US 2,585,583 described that polymers with a higher molecular weight than 100000 cannot be hydrogenated in a clear fashion.

In US 6,121,188**,** the hydrogenation of the nitrile groups of nitrile rubber was effected in the presence Co Raney having a particular mesoporous structure. In this case a 15% solution of nitrile rubber having a molar weight of 3000 was hydrogenated in THF. It is further stated that by said method, the reduction of nitrile groups occurs first and the C=C double bond is hydrogenated thereafter. Hence this method would not yield a HNBR wherein only a part of the nitrile groups are reduced to amine functions.

P. Göppert describes in his PhD Thesis "Aspekte der Hydrierung von Acryinitril-Butadien-Copolymeren", Technical University of Munich, 2012, pages 86 to 90 some attempts to hydrogenate HNBR with heterogeneous catalysts, wherein no reduction of nitrile groups to amino groups was achieved at all.

Thus, the data on hydrogenation of nitrile groups of butadiene-nitrile rubbers on heterogeneous catalysts are scarce and are mostly related to the use of low-molecular polymers. There are no examples in the art related to the hydrogenation of the side nitrile groups in hydrogenated nitrile rubbers with high molecular weights.

However, the amino-groups containing polymers obtained by reducing hydrogenated nitrile rubber are interesting precursors for example as solid support for various reagents or for the synthesis of polypeptides since their behavior (such as swelling) in organic solvents can be adjusted by the amount of nitrile groups of the hydrogenated nitrile rubber and the degree of reduction of its nitrile groups. Thus, the object of the present invention was to provide a method for the reduction of nitrile groups of partially and completely hydrogenated nitrile rubbers and thus a method for the production of the corresponding amino groups containing polymers.

### Summary of the invention

The present invention is related to a process for the hydrogenation of a part of the nitrile groups of partially or completely hydrogenated nitrile rubber to amino groups in the presence of a Raney-cobalt catalyst. The present invention allows a good control of the degree of hydrogenation of C≡N bonds in hydrogenated nitrile rubber having residual double bonds in the range from 0 to 20% which avoids the destruction of the polymer chain during the hydrogenation and with marginal gel formation.

### Detailed description of the invention.

The present invention provides a process for the reduction of nitrile groups of nitrile rubbers by hydrogenation. The HNBR according to the invention typically has a weight average molar mass Mw of from 20.000 to 1.000.000, preferably of from 100.000 to 800.000, and most preferably of from 200.000 to 500.000 as determined by gel chromatography.

Generally, the HNBR has a Mooney viscosity of from 10 to 180 MU, preferably of from 20 to 150 MU, most preferably of from 30 to 120 Mooney units. The Mooney viscosity (ML (1+4 @100°C)) is determined at 100°C by means of a shear disc viscometer in accordance with ASTM D 1646.

In a preferred embodiment, the HNBRs have a Mooney viscosity of from 10 to 180 MU and a weight average molar mass Mw of from 20.000 to 1.000.000, preferably a Mooney viscosity of from 20 to 150 and a weight average molar mass Mw of from 100.000 to 800.000 and, most preferably a Mooney viscosity of from 50 to 120 Mooney units and a weight average molar mass Mw of from 200.000 to 500.000.

### Nitrile rubber and hydrogenated nitrile rubber

For the purposes of the present invention, nitrile rubbers, also referred to as "NBR", are rubbers which are copolymers containing repeating units of at least one α,β-unsaturated nitrile, at least one conjugated diene and optionally 1, 2, 3, 4 or more further copolymerizable monomers.

Such nitrile rubbers and processes for producing such nitrile rubbers are well known, see, for example, W. Hofmann, Rubber Chem. Technol. 36 (1963) 1 **and** Ullmann's Encyclopedia of Industrial Chemistry, VCH Verlagsgesellschaft, Weinheim, 1993, pp. 255-261**.**

The conjugated diene in the nitrile rubber has typically from 4 to 16, preferably from 4 to 8, most preferably from 4 to 6 carbon atoms. Particularly preferred the conjugated diene is selected from 1,2-butadiene, 1,3-butadiene, isoprene, 2,3-dimethylbutadiene, piperylene or mixtures thereof. More preferred, the conjugated diene is selected from 1,3-butadiene and isoprene or mixtures thereof. Most preferred, the conjugated diene is 1,3-butadiene. The α,β-unsaturated nitrile has typically from 3 to 16, preferably from 3 to 8, most preferably from 3 to 5 carbon atoms. Particularly preferred the α,β-unsaturated nitrile is selected from acrylonitrile, methacrylonitrile, ethacrylonitrile or mixtures thereof. Most preferably, the α,β-unsaturated nitrile is acrylonitrile.

In a preferred embodiment of the invention the nitrile rubber is based on acrylonitrile and 1,3-butadiene alone or together with 1, 2 or more further comonomers.

The further copolymerizable monomers can be suitably selected by the person skilled in the art. Such monomers can be, for example, aromatic vinylmonomers, preferably styrene, α-methylstyrene and vinylpyridine, fluorine-containing vinylmonomers, preferably fluoroethyl vinyl ether, fluoropropyl vinyl ether, o-fluoromethylstyrene, vinyl pentafluorobenzoate, difluoroethylene and tetrafluoroethylene, or else copolymerizable anti-ageing monomers, preferably N-(4-anilinophenyl)acrylamide, N-(4-anilinophenyl)methacrylamide, N-(4-anilinophenyl)cinnamides, N-(4-anilinophenyl)crotonamide, N-phenyl-4-(3-vinylbenzyloxy)aniline and N-phenyl-4-(4-vinylbenzyloxy)aniline, and also non-conjugated dienes, such as 4-cyanocyclohexene and 4-vinylcyclohexene, or else alkynes, such as 1- or 2-butyne.

Alternatively, the further copolymerizable monomers can be derivatives of α,β-unsaturated carboxylic acids such as esters, or amides of α,β-unsaturated monocarboxylic or monoesters, diesters, or amides of α,β-unsaturated dicarboxylic acids.

It is possible to employ esters of the α,β-unsaturated monocarboxylic acids, preferably their alkyl esters and alkoxyalkyl esters. Preference is given to the alkyl esters, especially C₁-C₁₈-alkyl esters, of the α,β-unsaturated monocarboxylic acids. Particular preference is given to alkyl esters, especially C₁-C₁₈-alkyl esters, of acrylic acid or of methacrylic acid, more particularly methyl acrylate, ethyl acrylate, propyl acrylate, n-butyl acrylate, tert-butyl acrylate, 2-ethylhexyl acrylate, n-dodecyl acrylate, methyl methacrylate, ethyl methacrylate, butyl methacrylate and 2-ethylhexyl methacrylate. Also preferred are alkoxyalkyl esters of the α,β-unsaturated monocarboxylic acids, more preferably alkoxyalkyl esters of acrylic acid or of methacrylic acid, more particular C₂-C₁₂-alkoxyalkyl esters of acrylic acid or of methacrylic acid, very preferably methoxymethyl acrylate, methoxyethyl (meth)-acrylate, ethoxyethyl (meth)acrylate and methoxymethyl (meth)acrylate. Furthermore, mixtures of alkyl esters, such as those mentioned above, for example, with alkoxyalkyl esters, in the form of those mentioned above, can be employed. Cyanoalkyl acrylates and cyanoalkyl methacrylates in which the C atom number of the cyanoalkyl group is 2-12, preferably α-cyanoethyl acrylate, α,β-cyanoethyl acrylate and cyanobutyl methacrylate are also suitable. In addition, hydroxyalkyl acrylates and hydroxyalkyl methacrylate in which the C atom number of the hydroxyalkyl groups is 1-12, preferably 2-hydroxyethyl acrylate, 2-hydroxyethyl methacrylate and 3-hydroxypropyl acrylate; fluorine-substituted benzyl-group-containing acrylates or methacrylates, preferably fluorobenzyl acrylates, and fluorobenzyl methacrylate, acrylates and methacrylates containing fluoroalkyl groups, preferably trifluoroethyl acrylate and tetrafluoropropyl methacrylate, as well as α,β-unsaturated carboxylic esters containing amino groups, such as dimethylaminomethyl acrylate and diethylaminoethyl acrylate may be employed.

Particularly preferred alkyl esters of α,β-unsaturated monocarboxylic acids are methyl (meth)acrylate, ethyl (meth)acrylate, propyl (meth)acrylate, n-butyl (meth)acrylate, t-butyl (meth)acrylate, hexyl (meth)acrylate, 2-ethylhexyl (meth)acrylate, octyl (meth)acrylate, 2-propylheptyl acrylate and lauryl (meth)acrylate. More particularly, n-butyl acrylate is used. Particularly preferred alkoxyalkyl esters of the α,β-unsaturated monocarboxylic acids are methoxyethyl (meth)acrylate, ethoxyethyl (meth)acrylate and methoxymethyl (meth)acrylate. More particularly, methoxyethyl acrylate is used.

Particularly preferred hydroxyalkyl esters of the α,β-unsaturated monocarboxylic acids are hydroxyethyl (meth)acrylate, hydroxypropyl (meth)acrylate and hydroxybutyl (meth)acrylate.

Other esters of the α,β-unsaturated monocarboxylic acids that can be used are, for example, polyethylene glycol (meth)acrylate, polypropylene glycol (meth)acrylate, glycidyl (meth)acrylate, epoxy (meth)acrylate, N-(2-hydroxyethyl)acrylamides, N-(2-hydroxymethyl)acrylamides and urethane (meth)acrylate.

Furthermore, it is possible to use monoesters or diesters of α,β-unsaturated dicarboxylic acids.

These α,β-unsaturated dicarboxylic acid monoesters or diesters may be, for example, alkyl esters, preferably C₁-C₁₀ alkyl, more particularly ethyl, n-propyl, isopropyl, n-butyl, tert-butyl, n-pentyl or n-hexyl esters, alkoxyalkyl esters, preferably C₂-C₁₂ alkoxyalkyl, more preferably C₃-C₈-alkoxyalkyl, hydroxyalkyl, preferably C₁-C₁₂-hydroxyalkyl, more preferably C₂-C₈-hydroxyalkyl, cycloalkyl esters, preferably C₅-C₁₂-cycloalkyl, more preferably C₆-C₁₂-cycloalkyl, alkylcycloalkyl esters, preferably C₆-C₁₂-alkylcycloalkyl, more preferably C₇-C₁₀-alkylcycloalkyl, aryl esters, preferably C₆-C₁₄-aryl esters, these esters being monoesters or diesters, and it also being possible, in the case of the diesters, for the esters to be mixed esters.

Examples of α,β-unsaturated dicarboxylic acid diesters encompass
- maleic acid dialkyl esters, preferably dimethyl maleate, diethyl maleate, dipropyl maleate and di-n-butyl maleate;
- maleic acid dicycloalkyl esters, preferably dicyclopentyl maleate, dicyclohexyl maleate and dicycloheptyl maleate;
- maleic acid dialkyl cycloalkyl esters, preferably dimethyl cyclopentyl maleate and diethyl cyclohexyl maleate;
- maleic acid diaryl esters, preferably diphenyl maleate;
- maleic acid dibenzyl esters, preferably dibenzyl maleate;
- fumaric acid dialkyl esters, preferably dimethyl fumarate, diethyl fumarate, dipropyl fumarate and di-n-butyl fumarate;
- fumaric acid dicycloalkyl esters, preferably dicyclopentyl fumarate, dicyclohexyl fumarate and dicycloheptyl fumarate;
- fumaric acid dialkyl cycloalkyl esters, preferably dimethyl cyclopentyl fumarate and diethyl cyclohexyl fumarate;
- fumaric acid diaryl esters, preferably diphenyl fumarate;
- fumaric acid dibenzyl esters, preferably dibenzyl fumarate;
- citraconic acid dialkyl esters, preferably dimethyl citraconate, diethyl citraconate, dipropyl citraconate and di-n-butyl citraconate;
- citraconic acid dicycloalkyl esters, preferably dicyclopentyl citraconate, dicyclohexyl citraconate and dicycloheptyl citraconate;
- citraconic acid dialkyl cycloalkyl esters, preferably dimethyl cyclopentyl citraconate and diethyl cyclohexyl citraconate;
- citraconic acid diaryl esters, preferably diphenyl citraconate;
- citraconic acid dibenzyl esters, preferably dibenzyl citraconate;
- itaconic acid dialkyl esters, preferably dimethyl itaconate, diethyl itaconate, dipropyl itaconate and di-n-butyl itaconate;
- itaconic acid dicycloalkyl esters, preferably dicyclopentyl itaconate, dicyclohexyl itaconate and dicycloheptyl itaconate;
- itaconic acid dialkyl cycloalkyl esters, preferably dimethyl cyclopentyl itaconate and diethyl cyclohexyl itaconate;
- itaconic acid diaryl esters, preferably diphenyl itaconate;
- itaconic acid dibenzyl esters, preferably dibenzyl itaconate.
- Mesaconic acid dialkyl esters, preferably mesaconic acid diethyl esters;

It is possible to use free-radically polymerizable compounds which contain per molecule two or more olefinic double bonds, as further copolymerizable monomers. Examples of such di or polyunsaturated compounds are di or polyunsaturated acrylates, methacrylates or itaconates of polyols, such as, for example, 1,6-hexanediol diacrylate (HDODA), 1,6-hexanediol dimethacrylate, ethylene glycol diacrylate, ethylene glycol dimethacrylate (EGDMA), diethylene glycol dimethacrylate, triethylene glycol diacrylate, butane-1,4-diol diacrylate, propane-1,2-diol diacrylate, butane-1,3-diol dimethacrylate, neopentylglycol diacrylate, trimethylolpropane diacrylate, trimethylolpropane dimethacrylate, trimethylolethane diacrylate, trimethylolethane dimethacrylate, trimethylolpropane triacrylate, trimethylolpropane trimethacrylate (TMPTMA), glyceryl diacrylate and triacrylate, pentaerythritol di, tri and tetraacrylate or -methacrylate, dipentaerythritol tetra, penta and hexa-acrylate or -methacrylate or -itaconate, sorbitol tetraacrylate, sorbitol hexamethacrylate, diacrylates or dimethacrylates or 1,4-cyclohexanediol, 1,4 dimethylolcyclohexane, 2,2-bis(4-hydroxyphenyl)propane, of polyethylene glycols or of oligoesters or oligourethanes having terminal hydroxyl groups. As polyunsaturated monomers it is also possible to use acrylamides, such as, for example, methylenebisacrylamide, hexamethylene-1,6-bisacrylamide, diethylenetriaminetrismethacrylamide, bis(methacrylamidopropoxy)ethane or 2-acrylamidoethyl acrylate. Examples of polyunsaturated vinyl compounds and allyl compounds are divinylbenzene, ethylene glycol divinyl ether, diallyl phthalate, allyl methacrylate, diallyl maleate, triallyl isocyanurate or triallyl phosphate.

When comonomers of this kind are employed it is possible to take the polymerization to high conversions and to obtain nitrile rubbers which have a comparatively high average molecular weight Mw (weight average) and/or Mn (number average), and yet are gel-free.

The proportions of conjugated diene and α,β-unsaturated nitrile in the NBR polymers may vary within wide ranges. The proportion of or the sum of the conjugated dienes is typically in the range from 40 to 90% preferably in the range from 50 to 85%, by weight, based on the overall polymer. The proportion of or the sum of the α,β-unsaturated nitriles is typically 10 to 60%, preferably 15 to 50%, by weight, based on the overall polymer. The proportions of the monomers add up in each case to 100% by weight. Typically, the additional monomers may, depending on their nature, be present in amounts of 0% to 40% by weight, based on the overall polymer. In this case, the corresponding proportions of the conjugated diene or dienes and/or of the α,β-unsaturated nitrile or nitriles are replaced by the proportions of the additional monomers, with the proportions of all the monomers adding up in each case to 100% by weight.

If esters of (meth)acrylic acid are used as additional monomers, they are usually used in amounts of from 1 to 25% by weight.

The nitrogen content of the nitrile rubbers of the invention is determined by the Kjeldahl method in accordance with DIN 53 625. Owing to the content of polar comonomers, the nitrile rubbers are usually soluble in methyl ethyl ketone to an extent of > 85% by weight at 20°C.

The glass transition temperatures of the nitrile rubbers and HNBRs of the invention are generally situated in the range from -70°C to +20°C, preferably in the -60°C to 10° range. Preference is given to nitrile rubbers according to the invention which comprise repeating units of acrylonitrile, 1,3-butadiene and optionally of one or more further copolymerizable monomers. Preference is likewise given to nitrile rubbers having repeating units of acrylonitrile, 1,3 butadiene and one or more esters or amides of α,β-unsaturated monocarboxylic or dicarboxylic acids, and in particular repeating units of an alkylester of an α,β-unsaturated carboxylic acid, very particularly preferably of methyl (meth)acrylate, ethyl (meth)acrylate, propyl (meth)acrylate, n-butyl (meth)acrylate, t-butyl (meth)acrylate, hexyl (meth)acrylate, 2-ethylhexyl (meth)acrylate, octyl (meth)acrylate or lauryl (meth)acrylate.

The preparation of such nitrile rubbers is typically performed by emulsion-polymerization of the abovementioned monomers which is adequately known to those skilled in the art and is comprehensively described in the polymer literature. Nitrile rubbers which can be used for the purposes of the invention are also commercially available, e.g. as products from the product range of the trade names Perbunan® and Krynac® from Lanxess Deutschland GmbH.

### Hydrogenated nitrile butadiene rubbers:

The term hydrogenated nitrile butadiene rubbers or "HNBR" for short is intended to mean all aforementioned nitrile rubbers which have been subjected to hydrogenation of a part or of all of their C=C double bonds. Preferably, the term refers to hydrogenated nitrile rubbers with a degree of hydrogenation, based on the C=C double bond originating from the conjugated diene, of at least 80, more preferably at least 90, even more preferably at least 95 and most preferably at least 98%. The degree of hydrogenation can be determined, for example, by NMR or by IR spectroscopy.

For hydrogenation the nitrile rubber obtained from emulsion polymerization is converted into a solid rubber. The conversion of the nitrile rubber latex into a solid rubber is carried out by the methods known to the person skilled in the art. The nitrile rubber, from which impurities have been removed, is subsequently either dissolved in an organic solvent, if the impurities were removed from it by the purification methods known to the person skilled in the art, such as precipitation or coagulation and subsequent washing, or the retentate solution obtained by the method according to the present invention, which contains the dissolved and purified nitrile butadiene rubber, directly has a transition metal catalyst suitable for the hydrogenation added to it, and is hydrogenated.

The hydrogenation of nitrile rubber is well known to a person skilled in the art from e.g. US-A- 3,700,637; US 4,464,515 and DE A3-046,008, DE A3-227,650 and DE A3-329,974.

NBR and HNBR are also collectively referred to as (H)NBR in this application unless indicated otherwise.

### Catalyst

The catalyst for the reduction of HNBR according to the present invention employs Raney-Co which in the context of this invention means finely divided powder, typically containing more than 50%, preferably more than 70 % and most preferably more than 90 % by weight cobalt and the rest being other metals, typically transition metals of the 4^{th} period and their oxides, hydrates of said oxides or hydroxides. Raney-Co is generally obtained from an aluminum-cobalt alloy by leaching with a base such as sodium hydroxide.

Raney-cobalt catalyst is commercially available in form of an activated aqueous slurry e.g. from W.R. Grace Company and its preparation and activation is also well known to the person skilled in the art from various publications such as "Preparation and Properties of Raney Nickel-Cobalt" Catalysts, Journal of Catalysis, Volume 84, Issue 1, November 1983, Pages 189-199**.**

The Raney-Co powder typically has a mean particle size determined by sieve analysis according to DIN 66165 in the range of 0.001 mm to 10 mm, preferably in the range of 0.005 mm to 1 mm and particularly preferably in the range of 0.01 mm to 0.1 mm.

In another embodiment of the reaction, the Raney-Co can be supported on an another material, e.g. a polymer support or an oxidic material, such as MgO, CaO, TiO₂, ZrO₂, Fe₂O₃, Al₂O₃, or alkali metal. Preferably, the supported catalysts have a specific surface area ranging from 20 to 1000 m²/g, more preferably in the range of from 80 to700 m²/g and particularly preferably in the range of 100 to 600 m²/g (BET surface area according to DIN 66131).

The hydrogenation of HNBR can be carried out in the presence or absence of a solvent which can dissolve the HNBR at least partially or completely. Suitable solvents are, for example, halogenated organic solvents, preferably chlorinated aromatic, aliphatic and cycloaliphatic solvents such as monochlorobenzene, dichlorobenzene, methylene chloride and chloroform, aliphatic non-cyclic and cyclic ethers such as tetrahydrofuran, dioxane, dibutyl ether, methyl tertbutylether, aliphatic hydrocarbons such as decaline, aromatic hydrocarbons such as toluene, benzene and mixtures of these solvents. Tetrahydrofurane, decalin, dioxane, and mixtures thereof are preferred. The choice of a solvent may be dictated by the solubility of the starting polymer which can appropriately be selected by the person skilled in the art in view of the solubility parameters.

In a preferred embodiment, the hydrogenated nitrile rubber is hydrogenated in a solvent, wherein the concentration of partially or completely hydrogenated nitrile rubber in the solvent is in the range of from 1.5 to 30% by weight, preferably from 2 to 25% by weight, more preferably 4 to 20% by weight and most preferably 5 to 18 % by weight. The concentration of the solution may depend upon the molecular weight of the HNBR that is to be hydrogenated. Polymers of higher molecular weight are generally more difficult to dissolve.

The amount of the catalyst required for hydrogenation is a function of the temperature of hydrogenation and the desired degree of hydrogenation. The degree of saturation usually increases with the reaction temperature, catalyst concentration and mixing rate. Depending on the desired degree of saturation and the polymer molecular weight, these variables can be adjusted to achieve the desired reaction rate. The catalyst is typically employed in a ratio of 0.01 to 5.0, more preferably 0.07 to 3, further preferably 0.1 to 2 and most preferably 0.2 to 1 gram of catalyst per gram of partially or completely hydrogenated nitrile rubber.

The hydrogenation is generally carried out under hydrogen pressure of from 0.5 MPa to 25 MPa, preferably in the range of from 1.5 MPa to 18 MPa, more preferably in the range of from 3 MPa to 15 MPa and particularly preferably in the range of from 5 MPa to 12 MPa. The reaction temperature is typically in the range 50°C to 250°C, preferably in the range of from 100°C to 240°C, more preferably in the range of from 140°C to 230°C and most preferably in the range of from 170°C to 220°C.

The hydrogenation can be carried out in any suitable reactor, such as a fixed bed reactor, stirred reactor or spinning disc reactor.

Typically, the reaction time is in the range of from 1 h to 72 h, preferably in the range of from 2 h to 36 h and particularly preferably in the range of from 4 h to 24 h. Preferably, the hydrogenation is carried out in the presence of ammonia or alkaline hydroxides.

After the hydrogenation, the catalyst can be separated by filtration, centrifugation or by a magnetic field such as a permanent magnet or electromagnet. After the addition of antioxidants, the solvent is removed by vapor rotation and /or in a drying cabinet. Alternatively, the amino group containing HNBR can be isolated by steam stripping or precipitation with methanol or ethanol and drying afterwards. Alternatively, providing the catalyst in the metallic mesh basket with the reaction mixture circulation through the catalyst basket facilitates the hydrogenation since other devices for the separation of the supported catalyst such as a decanter, a centrifugal separator and a filter are not required at all.

In a typical embodiment, the completely or partially hydrogenated nitrile rubber is reduced under 10 MPa hydrogen in the presence of ammonia and of a Raney catalyst of this invention at 200 °C for between 12 to 24h.

In order to maintain advantageous physical properties of the HNBR, it is preferable to reduce not more than 66 %, more preferably not more than 46 % and most preferably not more than 33 % of the nitrile groups of the HNBR to amino groups. On the other hand, it is preferred if at least 1 %, more preferably at least 3%, more preferably at least 6 % and most preferably at least 10% of the nitrile groups of the HNBR to amino groups.

In a preferable embodiment, the inventive process leads to amino group containing polymers having a NH₂-content of from 0,01 to 10 %, preferably of from 0,1 to 7 %, most preferably of from 1 to 5 % by weight.

The amino group content in the hydrogenated product polymer can be determined e.g. from the decrease of the intensity of the CN absorption band in the IR-spectrum and the nitrile content of the hydrogenated nitrile rubber the reduction of the nitrile groups.

The presence of amino groups can be confirmed, e.g. by the ninhydrin test, wherein 50 mg amino group containing polymer is dissolved in 2,5 ml monochloro benzene at 70°C. After the polymer is dissolved completely, 200µl ninhydrin solution was added and the temperature adjusted to 70 to 80°C. After between 1 to 2 minutes, a purple colouring appeared which intensified within the following 5 min and faded away after 15 min.

Typically, the inventive process yields amino group containing HNBR having a gel content of not more than 10%, preferably not more than 5 %, even more preferably not more than 3 %, further preferably not more than 2 % and most preferably of between 0.01 and 1 % by weight.

The gel content is determined by dissolving 250 mg of the amino group containing polymer in 25 ml of methyl ethyl ketone at 25 °C while stirring for 24 h, followed by separating the non-soluble content via ultracentrifugation at 20000 rpm at 25 °C for 1 h. The separated solid content is then dried in a vaccum drying cabinet for 12 h at 75 °C, its weight determined gravimetrically and the gel content is calculated as the weight of the solid content divided by the weight of the amino group containing polymer (i.e. 250 mg).

A particularly preferred embodiment concerns amino-group containing HNBR possessing the amino- and/or gel content as define above.

Preferably, the nitrile-group containing polymer before reduction of the nitrile groups has an acrylonitrile content of from 18 to 50 % by weight.

The amount of remaining double bonds of e.g. HNBR can be determined by the IR-spectroscopic method described in Kautschuk + Gummi. Kunststoffe, Vol. 42 (1989), No. 2, pages 107-110 **and** Kautschuk + Gummi. Kunststoffe, Vol. 42 (1989), No.3, pages 194-197**.**

In a practical example of the inventive process, a nitrile-group containing polymer such as HNBR is placed in a solvent, preferably a THF or decaline solvent. The catalyst may be preliminarily activated under H₂ and placed under an argon atmosphere in a metallic mesh cell (basket), which has been built in the autoclave. Depending on the catalyst chosen, the catalyst may be reduced under a hydrogen flow for two hours at 250-350°C prior to the reaction. The polymer solution is introduced into the reactor pressured up to 100 bar, preferably between 20 and 50 bar, and heated up to 200°C, preferably 140°C to 200°C, and stirred at 500-1000 rpm. A preferred catalyst concentration is 0.01 to 1.0 g of the catalyst per gram of polymer, preferably 0.1 to 0.2. The polymer mixture is then recovered from the reactor without filtering of the catalyst. The degree of hydrogenation of the nitrile triple bonds in the hydrogenated polymer is then analyzed by IR-spectroscopy. The average degree of hydrogenation may also be determined by proton NMR measurements at 250C using 5% by weight polymer solutions with TMS as the internal standard.

### Example

2.5 g of HNBR (Therban® 3406 of Lanxess Deutschland GmbH, acrylonitrile content: 34 % (w/w), Mooney viscosity (ML1+4/100°C): 63, 0,8 % remaining C=C double bonds, Mn: 91,3 kg/mol, Mw: 297 kg/mol, polydispersity index PDI (Mw/Mn): 3,3) was dissolved in 45 g of THF-dioxane (1:1) mixture at 50 °C under vigorous stirring. The prepared solution was loaded in the autoclave (HNBR concentration: 5% mass.). The catalyst (Co Raney, particle size 0.05-0.1 mm) loading was 2.5 g. Substrate/catalyst ratio = 1. The catalyst was loaded in the autoclave in an argon atmosphere. Before the experiment, the autoclave was purged twice with argon and hydrogen. The initial H₂ pressure in the autoclave was 40 atm. After heating to 220 °C, the autoclave was adjusted to a hydrogen pressure of 100 atm. The hydrogenation carried out for 20 hours showed a conversion of CN groups of HNBR rubber close to 24%.

Varying the reaction time from 5 h to 200 h shows that longer runs resulted in higher conversions of the nitrile groups. Thus, the degree of CN bond saturation in the range of 1-100% can be adjusted by varying the duration of the hydrogenation and, to a lesser extent, the reaction temperature, pressure and speed and way of mixing and adding NH₃.

## Claims

1. A process for the reduction of nitrile groups of partially or completely hydrogenated nitrile rubber having a weight average molar mass Mw of from 20.000 to 1.000.000, preferably of from 100.000 to 800.000, and most preferably of from 200.000 to 500.000, wherein the hydrogenated nitrile rubber is contacted with Raney-Co in the presence of hydrogen.

2. The process according to Claim 1, wherein the partially or completely hydrogenated nitrile rubber is hydrogenated in a solvent and wherein the concentration of partially or completely hydrogenated nitrile rubber in the solvent is in the range of from 1.5 to 30% by weight, preferably from 2 to 25% by weight, more preferably 4 to 20% by weight and most preferably 5 to 18 % by weight.

3. The process according to Claim 1 or 2, wherein a temperature of from 50°C to 250°C, preferably in the range of from 100°C to 240°C, more preferably in the range of from 140°C to 230°C and most preferably in the range of from 170°C to 220°C is applied.

4. The process according to any of Claims 1 to 3, wherein the partially or completely hydrogenated nitrile rubber has a Mooney viscosity (ML (1+4 @100°C) in accordance with ASTM D 1646) of from 10 to 180 MU, preferably of from 20 to 150 MU, most preferably of from 30 to 120 MU.

5. The process according to any of Claims 1 to 4, wherein the partially or completely hydrogenated nitrile rubber has an acrylonitrile content of from 18 to 50 %.

6. The process according to any of Claims 1 to 5, wherein amino-group containing polymers are obtained which have a gel content of not more than 10%, preferably not more than 5 %, even more preferably not more than 3 %, further preferably not more than 2 % and most preferably of between 0.01 and 1 % by weight.

7. The process according to any of Claims 1 to 6, wherein amino-group containing polymers are obtained which have a NH₂-content of from 0,01 to 10 %, preferably of from 0,1 to 7 %, most preferably of from 1 to 5 % by weight.

8. The process according to any of Claims 1 to 7, wherein not more than 66 %, more preferably not more than 46 %, most preferably not more than 33 % of the nitrile groups of the HNBR are reduced to amino groups.

9. The process according to any of Claims 1 to 8 wherein the hydrogenation is carried out in a fixed bed reactor, stirred reactor or spinning disc reactor.

10. The process according to any of Claims 1 to 9 wherein the hydrogenation is carried out in a solvent containing one or more aliphatic non-cyclic and cyclic ethers such as tetrahydrofuran, dioxane, dibutyl ether, methyl tert-butylether and/or one or more aliphatic hydrocarbons preferably decaline, and/or one or more aromatic hydrocarbons preferably selected from toluene and benzene.

11. The process according to any of Claims 1 to 10, wherein a hydrogen pressure in the range of from 0.5 MPa to 25MPa, preferably in the range of from 1.5 MPa to 18 MPa, more preferably in the range of from 3 MPa to 15 MPa and particularly preferably in the range of from 5 MPa to 12 MPa is applied.

12. The process according to any of Claims 1 to 11, wherein the catalyst is employed in a ratio of from 0.01 to 5.0, more preferably from 0.07 to 3, further preferably from 0.1 to 2 and most preferably from 0.2 to 1 gram of catalyst per gram of partially or completely hydrogenated nitrile rubber.

13. The use of Raney-cobalt for the reduction of the nitrile groups of partially or completely hydrogenated nitrile rubber having a weight average molar mass Mw of from 20.000 to 1.000.000, preferably of from 100.000 to 800.000, and most preferably of from 200.000 to 500.000 according to any of Claims 1 to 12.
